# EUROPEAN PATENT SPECIFICATION

(11) **EP 3 262 583 B1**
(45) Date of publication and mention of the grant of the patent: **21.07.2021**
(21) Application number: 16755947.5
(22) Date of filing: 26.02.2016
(51) Int. Cl.: G06Q 20/00, G06Q 20/04, G06Q 20/32, G06Q 20/40, G07F 7/08, H04L 29/08, G07F 19/00, G06Q 20/38, G06Q 20/34, G07F 9/02

(54) **METHOD AND DEVICE FOR CONTROLLING PAYMENT FUNCTION**
VERFAHREN UND VORRICHTUNG ZUR STEUERUNG DER BEZAHLFUNKTION
PROCÉDÉ ET DISPOSITIF PERMETTANT DE COMMANDER UNE FONCTION DE PAIEMENT

(30) Priority: 27.02.2015 US 201562126121 P; 14.07.2015 KR 20150100124
(43) Date of publication of application: 03.01.2018
(73) Proprietor: Samsung Electronics Co., Ltd., Suwon-si, Gyeonggi-do 16677 (KR)
(72) Inventor: LEE, Ji Hye, Seoul 08786 (KR); KIM, Jong Ho, Ansan-si Gyeonggi-do 15595 (KR); CHOI, Jin Wan, Suwon-si Gyeonggi-do 16697 (KR); PARK, Soo Bin, Suwon-si Gyeonggi-do 16490 (KR); JEONG, Min Chul, Hwaseong-si Gyeonggi-do 18431 (KR)
(74) Representative: HGF
(86) International application number: PCT/KR2016/001968
(87) International publication number: WO 2016/137297

(56) References cited:
- EP-A2- 0 949 595
- WO-A1-2014/189569
- WO-A1-2015/004803
- US-A1- 2002 186 845
- US-A1- 2010 216 429
- US-A1- 2011 145 932
- US-A1- 2012 149 332
- US-A1- 2012 149 332
- US-A1- 2012 171 992
- US-A1- 2012 254 290
- US-A1- 2012 254 290
- US-A1- 2013 013 480
- US-A1- 2013 159 186
- US-A1- 2014 025 520
- US-A1- 2014 040 126
- US-A1- 2014 364 099
- US-A1- 2014 370 851

## Description

### Technical Field

The present disclosure relates to a technique for controlling a payment function of an electronic device remotely.

### Background Art

An electronic device such as a smartphone provides a payment function. For example, some smartphones may perform a payment function by registering payment information of a credit card to a payment application of an electronic device and communicating with a point of sale (POS) terminal of a store through near filed communication (NFC) or magnetic stripe transmission (MST). Alternatively, a payment function may be performed by outputting the barcode screen of a credit card to the display of a smartphone and recognizing this through a barcode reader.

Moreover, when an electronic device is lost, a service for notifying the location of the lost electronic device is provided.

WO 2014/189569 A1 discusses methods for managing mobile entity states. US 2014/040126 A1 discusses managing user devices associated with a digital wallet account. US 2012/171992 A1 discusses a method for securing information over-the-air in a non-Universal Integrated Circuit Card type secure element of a mobile terminal. US 2012/254290 A1 discusses a method to allow a service provider supporting applications running on a client device to remotely disable the applications running on the client device. US 2014/025520 A1 discusses a method which comprises storing a biometric trait of a user in a data communication device of the user. US 2013/159186 A1 discusses a system for using a dynamic temporary credential with a portable communication device for use in a transaction with an electronic control point.

The above information is presented as background information only to assist with an understanding of the present disclosure.

### Disclosure of Invention

### Technical Problem

When an electronic device for providing a payment function is lost, even if a user identifies the location of the lost electronic device through a location providing service, since a payment function cannot be controlled through the lost electronic device until the lost electronic device is retrieved, the user may suffer a monetary loss.

### Solution to Problem

Aspects of the present disclosure are to address at least the above-mentioned problems and/or disadvantages and to provide at least the advantages described below. The invention is defined as an electronic device according to claim 1 and a method according to claim 12. Various embodiments are defined by the dependent claims.

In accordance with an aspect of the present disclosure, an electronic device for supporting a payment function is provided. The electronic device includes a communication module, at least one memory configured to store a payment application, and a processor electrically connected to the memory and the communication module, wherein the memory stores instructions adapted, when executed, to cause the processor to: receive, by the payment application, payment information from an external device via the communication module and store, by the payment application, the received payment information in the memory, receive a deactivation request of at least one of the payment application and the payment information from the external device via the communication module, in response to the request, deactivate the at least one of the payment application and the payment information, and replace the payment application with a dummy program corresponding to the payment application.

In accordance with another aspect of the present disclosure, a method of controlling a payment function in an electronic device is provided. The method includes receiving, by a payment application payment information from an external device using a payment application and storing the received payment information, receiving a deactivation request of at least one of the payment application of the electronic device and the payment information, in response to the request, deactivating the at least one of the payment application and the payment information, and replacing the payment application with a dummy program corresponding to the payment application.

Other aspects, advantages, and salient features of the disclosure will become apparent to those skilled in the art from the following detailed description, which, taken in conjunction with the annexed drawings, discloses various embodiments of the present disclosure.

### Advantageous Effects of Invention

According to various embodiments of the preset disclosure, when a user who uses a payment server through a user terminal loses the user terminal, a malicious use of a payment function by others may be restricted.

Additionally, a payment using a terminal that a user loses may be restricted and payment information stored in the terminal may be deleted through a webpage provided from a server.

Various effects identified directly or indirectly may be provided through this specification.

### Description of Drawings

The above and other aspects, features, and advantages of certain comparative examples of the present disclosure will be more apparent from the following description taken in conjunction with the accompanying drawings, in which:
FIG. 1 is a block diagram illustrating a network environment according to a comparative example.
FIG. 2 is a block diagram of an electronic device according to a comparative example.
FIG. 3 is a block diagram of a program module according to a comparative example.
FIG. 4 is a view illustrating a payment system according to a comparative example.
FIG. 5 is a view illustrating a payment service subscription and payment server lock/delete process between a user terminal and a server according to a comparative example.
FIG. 6 is a view illustrating a process for controlling a payment function with respect to a lost terminal according to a comparative example.
FIG. 7 is a view illustrating a card lock request screen according to a comparative example.
FIG. 8 is a view illustrating a process for performing card lock between a server and a lost terminal according to a comparative example.
FIG. 9 is a view illustrating a card lock result screen according to a comparative example.
FIGS. 10a to 10c are views illustrating a card lock screen according to a comparative example.
FIG. 11 is a view illustrating a process for performing card deletion between a server and a lost terminal or the initialization of a payment application according to an example of the present disclosure;
FIGS. 12a and 12b are views illustrating a screen of an initialized payment application and a card add screen according to a comparative example.
FIG. 13 is a view illustrating a process for performing card lock/disposal between a server and a financial server according to a comparative example.
FIG. 14 is a view illustrating a process for replacing a payment terminal according to a comparative example.

Throughout the drawings, it should be noted that like reference numbers are used to depict the same or similar elements, features, and structures.

### Mode for Invention

The following description with reference to the accompanying drawings is provided to assist in a comprehensive understanding of various examples of the present disclosure as defined by the claims. It includes various specific details to assist in that understanding, but these are to be regarded as merely exemplary. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various examples of the present disclosure is provided for illustration purposes only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The term "include," "comprise," and "have", or "may include," or "may comprise" and "may have" used herein indicates disclosed functions, operations, or existence of elements but does not exclude other functions, operations or elements.

For instance, the expression "A or B", or "at least one of A or/and B" may indicate include A, B, or both A and B. For instance, the expression "A or B", or "at least one of A or/and B" may indicate (1) at least one A, (2) at least one B, or (3) both at least one A and at least one B.

Various terms, such as "1st", "2nd", "first", "second", and the like used herein may refer to modifying various different elements of various examples of the present disclosure, but do not limit the elements. The expressions may be used to distinguish one element from another element. For instance, "a first user device" and "a second user device" may indicate different users regardless of the order or the importance. Similarly, a first component may be referred to as a second component and vice versa without departing from the scope of the present disclosure.

In various examples of the present disclosure, it will be understood that when a component (e.g., a first component) is referred to as being "(operatively or communicatively) coupled with/to" or "connected to" another component (e.g., a second component), the component may be directly connected to the other component or connected through another component (e.g., a third component). In various examples of the present disclosure, it will be understood that when a component (e.g., a first component) is referred to as being "directly connected to" or "directly access" another component (e.g., a second component), another component (e.g., a third component) does not exist between the component (e.g., the first component) and the other component (e.g., the second component).

The expression "configured to" used in various examples of the present disclosure may be interchangeably used with "suitable for", "having the capacity to", "designed to", "adapted to", "made to", or "capable of" according to a situation, for example. The term "configured to" may not necessarily mean "specifically designed to" in terms of hardware. Instead, the expression "a device configured to" in some situations may mean that the device and another device or part are "capable of'. For example, "a processor configured to perform A, B, and C" in a phrase may mean a dedicated processor (e.g., an embedded processor) for performing a corresponding operation or a generic-purpose processor (e.g., a central processing unit (CPU) or application processor (AP)) for performing corresponding operations by executing at least one software program stored in a memory device.

Unless otherwise indicated herein, all the terms used herein, which include technical or scientific terms, may have the same meaning that is generally understood by a person skilled in the art. In general, the terms defined in the dictionary should be considered to have the same meaning as the contextual meaning of the related art, and, unless clearly defined herein, should not be understood abnormally or as having an excessively formal meaning. In any cases, even the terms defined in this specification cannot be interpreted as excluding embodiments of the present disclosure.

According to various examples of the present disclosure, electronic devices may include at least one of smartphones, tablet personal computers (PCs), mobile phones, video phones, electronic book (e-book) readers, desktop PCs, laptop PCs, netbook computers, workstation server, personal digital assistants (PDAs), portable multimedia players (PMPs), moving picture experts group phase 1 or phase 2 (MPEG-1 or MPEG-2) audio layer 3 (MP3) players, mobile medical devices, cameras, and wearable devices (e.g., smart glasses, head-mounted-devices (HMDs), electronic apparel, electronic bracelets, electronic necklaces, electronic appcessories, electronic tattoos, smart mirrors, and smart watches).

According to various examples of the present disclosure, an electronic device may be smart home appliances. The smart home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™ or Google TV™), game consoles (e.g., Xbox™ and PlayStation™), electronic dictionaries, electronic keys, camcorders, and electronic picture frames.

According to various examples of the present disclosure, an electronic device may include at least one of various medical devices supporting call forwarding service (e.g., various portable measurement devices, such as glucometers, heart rate meters, blood pressure meters, temperature meters, and the like; magnetic resonance angiography (MRA) devices; magnetic resonance imaging (MRI) devices; computed tomography (CT) devices; medical imaging devices; ultrasonic devices; and the like), navigation devices, global positioning system (GPS) receivers, event data recorders (EDRs), flight data recorders (FDRs), vehicle infotainment devices, marine electronic equipment (e.g., marine navigation systems, gyro compasses, and the like), avionics, security equipment, vehicle head units, industrial or household robots, financial institutions' automatic teller's machines (ATMs), or stores' point of sales (POSs) or internet of things (e.g., bulbs, various sensors, electric or gas meters, sprinkler systems, fire alarms, thermostats, street lights, toasters, exercise equipment, hot water tanks, heaters, boilers, and the like).

According to various examples of the present disclosure, an electronic device may include at least one of part of furniture or buildings/structures supporting call forwarding service, electronic boards, electronic signature receiving devices, projectors, and various measuring instruments (e.g., water, electricity, gas, or radio signal measuring instruments). An electronic device according to various examples of the present disclosure may be one of the above-mentioned various devices or a combination thereof. Additionally, an electronic device according to an example of the present disclosure may be a flexible electronic device. Additionally, an electronic device according to an example of the present disclosure is not limited to the above-mentioned devices and may include a new kind of an electronic device according to the technology development.

Hereinafter, an electronic device according to various examples of the present disclosure will be described with reference to the accompanying drawings. The term "user" in this disclosure may refer to a person using an electronic device or a device using an electronic device (e.g., an artificial intelligent electronic device).

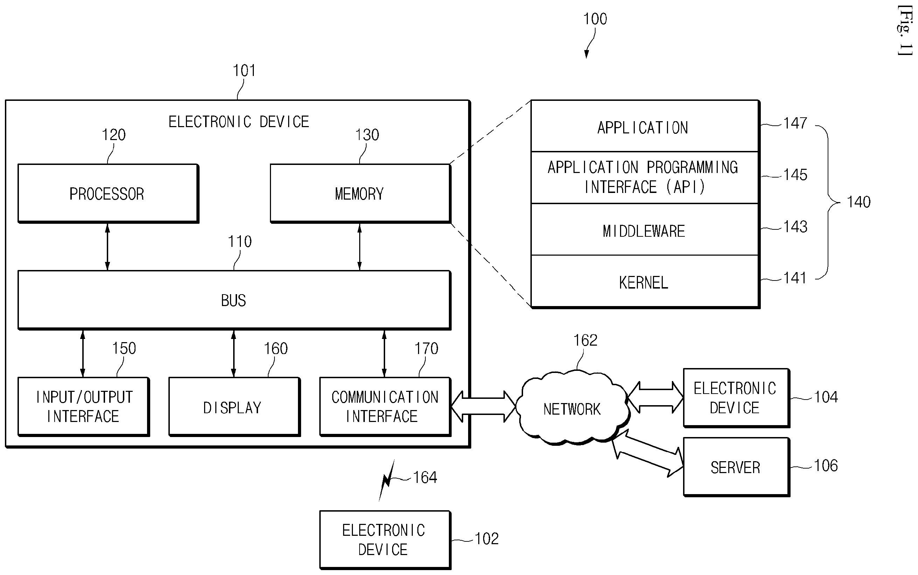

FIG. 1 is a block diagram illustrating a network environment according to a comparative example.

Referring to FIG. 1, in a network environment 100, an electronic device 101, 102, or 104, or a server 106, may be connected to each other through a network 162 or a short-range communication 164. The electronic device 101 may include a bus 110, a processor 120, a memory 130, an input/output interface 150, a display 160, and a communication interface 170. According to an example of the present disclosure, the electronic device 101 may additionally include a different component.

The bus 110 may include a circuit for connecting the components 110 to 170 to each other and delivering a communication (e.g., control message and/or data) between the components 110 to 170.

The processor 120 may include at least one of a CPU, an AP, and a communication processor (CP). The processor 120 may execute calculation or data processing for control and/or communication of at least one another component of the electronic device 101.

The memory 130 may include volatile and/or nonvolatile memory. The memory 130 may store instructions or data relating to at least one another component of the electronic device 101. The memory 130 may store software and/or programs 140. The program 140 may include a kernel 141, a middleware 143, an application programming interface (API) 145, and/or an application program (or an application) 147. At least part of the kernel 141, the middleware 143, and the API 145 may be called an operating system (OS).

The kernel 141 may control or manage system resources (e.g., the bus 110, the processor 120, the memory 130, and the like) used for performing operations or functions implemented in other programs (e.g., the middleware 143, the API 145, or the application program 147). Additionally, the kernel 141 may provide an interface for controlling or managing system resources by accessing an individual component of the electronic device 101 from the middleware 143, the API 145, or the application program 147.

The middleware 143 may serve as an intermediary role for exchanging data as the API 145 or the application program 147 communicates with the kernel 141. The middleware 143 may process at least one job request received from the application program 147 according to a priority. For example, the middleware 143 may assign to at least one application program 147 a priority for using a system resource (e.g., the bus 110, the processor 120, or the memory 130) of the electronic device 101. For example, the middleware 143 may perform scheduling or load balancing on the at least one job request by processing the at least one job request according to the priority assigned to the at least one job request.

The API 145, as an interface for allowing the application 147 to control a function provided from the kernel 141 or the middleware 143, may include at least one interface or function (e.g., an instruction) for file control, window control, image processing, or character control.

The input/output interface 150 may serve as an interface for delivering instructions or data inputted from a user or another external device to another component(s) of the electronic device 101. Additionally, the input/output interface 150 may output instructions or data received from another component(s) of the electronic device 101 to a user or another external device.

The display 160 may include a liquid crystal display (LCD), a light-emitting diode (LED) display, an organic LED (OLED) display, a microelectromechanical systems (MEMS) display, or an electronic paper display. The display 160 may display a variety of content (e.g., text, an image, a video, an icon, a symbol, and the like) to a user. The display 160 may include a touch screen, and may receive a touch, gesture, proximity, or hovering input by using an electronic pen or a user's body part.

The communication interface 170 may set a communication between the electronic device 101 and an external device (e.g., the first external electronic device 102, the second external electronic device 104, or the server 106). For example, the communication interface 170 may communicate with an external device (e.g., the second external electronic device 104 or the server 106) in connection to the network 162 through wireless communication or wired communication.

The wireless communication, as a cellular communication protocol, may use at least one of long-term evolution (LTE), LTE-advanced (LTE-A), code division multiple access (CDMA), wideband CDMA (WCDMA), universal mobile telecommunications system (UMTS), wireless broadband (WiBro), global system for mobile communications (GSM), and the like. Additionally, the wireless communication, for example, may include a short range communication 164. The short range communication 164 may include at least one of Wi-Fi, Bluetooth, near filed communication (NFC), GPS, and the like.

The magnetic stripe transmission (MST) may generate pulses by using magnetic signals according to transmission data and the pulses may generate magnetic signals. The electronic device 102 may transmit the magnetic signals to a POS and the POS may detect the magnetic signals by using an MST reader and restore the data by converting the detected magnetic signals into electrical signals.

The global navigation satellite system (GNSS) may include at least one of GPS, GLONASS, and BeiDou navigation satellite system (hereinafter referred to as BeiDou) and Galileo (i.e., the European global satellite-based navigation system). Hereinafter, GPS and GNSS may be interchangeably used. The wired communication may include at least one of a universal serial bus (USB), a high definition multimedia interface (HDMI), recommended standard 232 (RS-232), a plain old telephone service (POTS), and the like. The network 162 may include a telecommunications network, such as at least one of a computer network (e.g., local area network (LAN) or wide area network (WAN)), the Internet, and a telephone network.

Each of the first and second external electronic devices 102 and 104 may be the same or different type of the electronic device 101. According to an example of the present disclosure, the server 106 may include a group of one or more servers. According to various examples of the present disclosure, all or part of operations executed on the electronic device 101 may be executed on another one or more electronic devices (e.g., the electronic device 102 or 104 or the server 106). According to an example of the present disclosure, when the electronic device 101 performs a certain function or service automatically or by a request, the electronic device 101 may request at least part of a function relating thereto from another device (e.g., the electronic device 102 or 104 or the server 106) instead of or in addition to executing the function or service by itself. The other electronic device (e.g., the external electronic device 102 or 104 or the server 106) may execute a requested function or an additional function and may deliver an execution result to the electronic device 101. The electronic device 101 may provide the requested function or service as it is or by processing the received result additionally. For this, cloud computing, distributed computing, or client-server computing technology may be used.

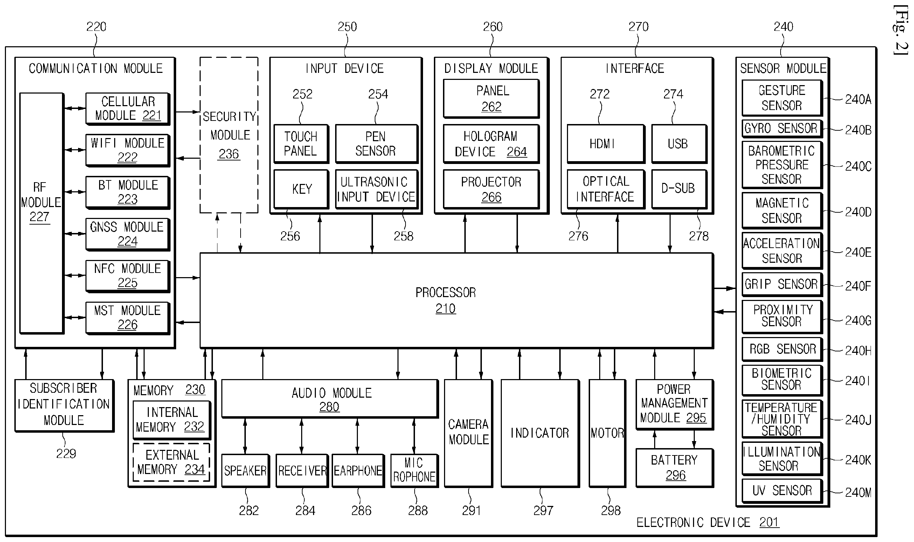

FIG. 2 is a block diagram of an electronic device according to a comparative example.

Referring to FIG. 2, an electronic device 201 may include all or part of the electronic device 101 shown in FIG. 1. The electronic device 201 may include at least one processor (e.g., an AP 210), a communication module 220, a SIM 229, a memory 230, a sensor module 240, an input device 250, a display 260, an interface 270, an audio module 280, a camera module 291, a power management module 295, a battery 296, an indicator 297, and a motor 298.

The processor 210 may control a plurality of hardware or software components connected thereto and also may perform various data processing and operations by executing an OS or an application program. The processor 210 may be implemented with a system on chip (SoC). According to an example of the present disclosure, the processor 210 may further include a graphics processing unit (GPU) (not shown) and/or an image signal processor (ISP). The processor 210 may include at least part (e.g., the cellular module 221) of other components shown in FIG. 2. The processor 210 may load commands or data received from at least one of other the components (e.g., nonvolatile memory) and process commands or data, and may store various data in a nonvolatile memory.

The communication module 220 may have the same or similar configuration to the communication interface 170 of FIG. 1. The communication module 220 may include a cellular module 221, a Wi-Fi module 222, a Bluetooth module 223, a GNSS module 224 (e.g., a GPS module, a GLONASS module, a BeiDou module, or a Galileo module), an NFC module 225, an MST module 226, and a radio frequency (RF) module 227.

The cellular module 221 may provide voice call, video call, text service, or Internet service through communication network. The cellular module 221 may perform a distinction and authentication operation on the electronic device 201 in a communication network by using a subscriber identity module (SIM) (e.g., the SIM card 229). According to an example of the present disclosure, the cellular module 221 may perform at least part of a function that the processor 210 provides. According to an example of the present disclosure, the cellular module 221 may further include a CP.

Each of the Wi-Fi module 222, the Bluetooth module 223, the GNSS module 224, the NFC module 225, and the MST module 226 may include a processor for processing data transmitted/received through a corresponding module. According to an example of the present disclosure, at least part (e.g., two or more) of the cellular module 221, Wi-Fi module 222, the Bluetooth module 223, the GNSS module 224, the NFC module 225, and the MST module 226 may be included in one integrated circuit (IC) or IC package.

The RF module 227 may transmit/receive communication signals (e.g., RF signals). The RF module 227 may include a transceiver, a power amp module (PAM), a frequency filter, a low noise amplifier (LNA), or an antenna. According to an example of the present disclosure, at least one of the cellular module 221, the Wi-Fi module 222, the Bluetooth module 223, the GNSS module 224, the NFC module 225, and the MST module 226 may transmit/receive RF signals through a separate RF module.

The SIM 229 may include a card including a SIM and/or an embedded SIM and also may include unique identification information (e.g., an IC card identifier (ICCID)) or subscriber information (e.g., an international mobile subscriber identity (IMSI)).

The memory 230 (e.g., the memory 130) may include an internal memory 232 or an external memory 234. The internal memory 232 may include at least one of a volatile memory (e.g., a dynamic random access memory (DRAM), a static RAM (SRAM), a synchronous DRAM (SDRAM)) and a non-volatile memory (e.g., a one-time programmable read only memory (OTPROM), a PROM, an erasable and programmable ROM (EPROM), an electrically erasable and programmable ROM (EEPROM), a mask ROM, a flash ROM, a flash memory (e.g., NAND flash or NOR flash), a hard drive, and a solid state drive (SSD)).

The external memory 234 may further include a flash drive, such as compact flash (CF), secure digital (SD), micro-SD, mini-SD, extreme digital (xD), multimedia card (MMC) or a memory stick. The external memory 234 may be functionally and/or physically connected to the electronic device 201 through various interfaces.

A security module 236, as a module including a storage space having a relatively higher security level than the memory 230, may be a circuit for securing safe data storage and protected execution environment. The security module 236 may be implemented as a separate circuit and may include an additional processor. The security module 236 may be in a detachable smart chip or a SD card or may include an embedded secure element (eSE) embedded in a fixed chip of the electronic device 201. Additionally, the security module 236 may run on a different OS from the electronic device 201. For example, the security module 236 may run based on java card open platform (JCOP) OS.

The sensor module 240 measures physical quantities or detects an operating state of the electronic device 201, thereby converting the measured or detected information into electrical signals. The sensor module 240 may include at least one of a gesture sensor 240A, a gyro sensor 240B, a barometric pressure sensor 240C, a magnetic sensor 240D, an acceleration sensor 240E, a grip sensor 240F, a proximity sensor 240G, a color sensor 240H (e.g., a red, green, blue (RGB) sensor), a biometric sensor 2401, a temperature/humidity sensor 240J, an illumination sensor 240K, and an ultraviolet (UV) sensor 240M. Additionally or alternatively, the sensor module 240 may include an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling at least one sensor therein. According to an example of the present disclosure, the electronic device 201 may further include a processor configured to control the sensor module 240 as part of or separately from the processor 210 and thus may control the sensor module 240 while the processor 210 is in a sleep state.

The input device 250 may include a touch panel 252, a (digital) pen sensor 254, a key 256, or an ultrasonic input device 258. The touch panel 252 may use at least one of capacitive, resistive, infrared, or ultrasonic methods, for example. Additionally, the touch panel 252 may further include a control circuit. The touch panel 252 may further include a tactile layer to provide tactile response to a user.

The (digital) pen sensor 254, for example, may include a sheet for recognition as part of a touch panel or a separate sheet for recognition. The key 256 may include a physical button, an optical key, or a keypad, for example. The ultrasonic input device 258 may detect ultrasonic waves generated from an input tool through a microphone (e.g., the microphone 288) in order to determine data corresponding to the detected ultrasonic waves.

The display 260 (e.g., the display 160) may include a panel 262, a hologram device 264, or a projector 266. The panel 262 may have the same or similar configuration to the display 160 of FIG. 1. The panel 262 may be implemented to be flexible, transparent, or wearable. The panel 262 and the touch panel 252 may be configured with one module. The hologram 264 may show three-dimensional images in the air by using the interference of light. The projector 266 may display an image by projecting light on a screen. The screen may be placed inside or outside the electronic device 201. According to an example of the present disclosure, the display 260 may further include a control circuit for controlling the panel 262, the hologram device 264, or the projector 266.

The interface 270 may include an HDMI 272, a USB 274, an optical interface 276, or a D-subminiature (D-sub) 278, for example. The interface 270, for example, may be included in the communication interface 170 shown in FIG. 1. Additionally or alternatively, the interface 270 may include a mobile high-definition link (MHL) interface, an SD card/ MMC interface, or an infrared data association (IrDA) standard interface.

The audio module 280 may convert sound into electrical signals and convert electrical signals into sounds. At least some components of the audio module 280 may be included in the input/output interface 145 shown in FIG. 1. The audio module 280 may process sound information inputted/outputted through a speaker 282, a receiver 284, an earphone 286, or a microphone 288.

The camera module 291, as a device for capturing a still image and a video, may include at least one image sensor (e.g., a front sensor or a rear sensor), a lens, an ISP, or a flash (e.g., an LED or a xenon lamp).

The power management module 295 may manage the power of the electronic device 201. The power management module 295 may include a power management IC (PMIC), a charger IC, or a battery or fuel gauge. The PMIC may have a wired and/or wireless charging method. Examples of the wireless charging method include a magnetic resonance method, a magnetic induction method, or an electromagnetic method. An additional circuit for wireless charging (e.g., a circuit, such as a coil loop, a resonant circuit, a rectifier circuit, and the like), may be added. The battery gauge may measure the remaining amount of the battery 296, or a voltage, current, or temperature thereof during charging. The battery 296 may include a rechargeable battery and/or a solar battery.

The indicator 297 may display a specific state of the electronic device 201 or part thereof (e.g., the processor 210), such as a booting state, a message state, or a charging state. The motor 298 may convert electrical signals into mechanical vibration and may generate vibration or haptic effect. Although not shown in the drawings, the electronic device 201 may include a processing device (e.g., a GPU) for mobile TV support. A processing device for mobile TV support may process media data according to the standards, such as digital multimedia broadcasting (DMB), digital video broadcasting (DVB), mediaFLO™, and the like.

Each of the above-mentioned components of the electronic device according to various examples of the present disclosure may be configured with at least one component and the name of a corresponding component may vary according to the kind of an electronic device. An electronic device according to various examples of the present disclosure may include at least one of the above-mentioned components, or may further include another component. Additionally, some components in an electronic device according to various examples of the present disclosure are configured as one entity, so that functions of previous corresponding components are performed identically.

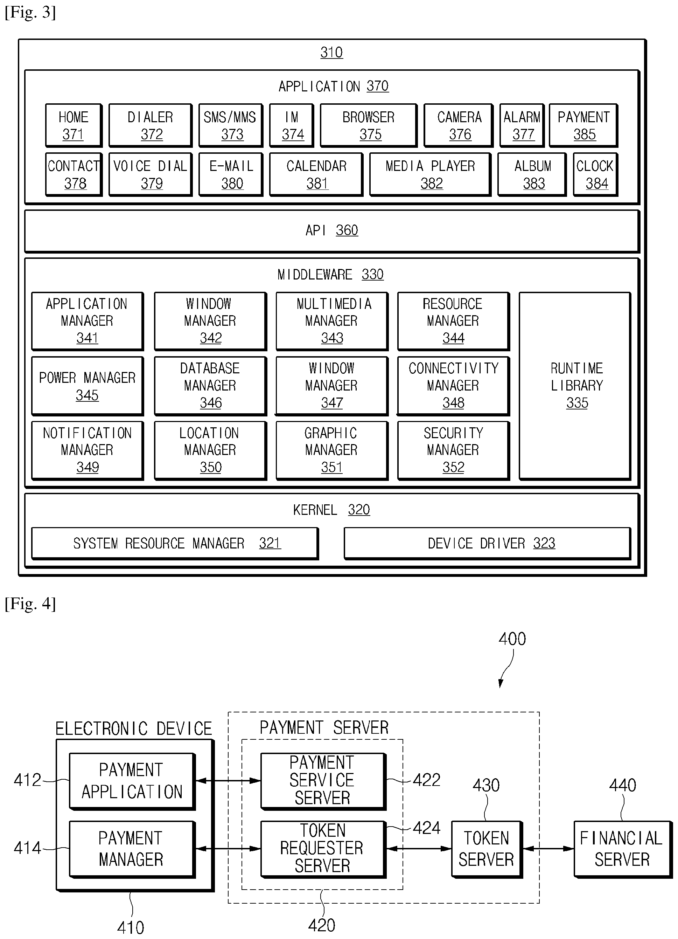

FIG. 3 is a block diagram of a program module according to a comparative example.

Referring to FIG. 3, a program module 310 (e.g., the program 140) may include an OS for controlling a resource relating to an electronic device (e.g., the electronic device 101) and/or various applications (e.g., the application program 147) running on the OS. The OS may include Android®, iOS®, Windows®, Symbian®, or Tizen®.

The programs may include a kernel 320, a middleware 330, an API 360, and/or an application program (or an application) 370. At least part of the program module 310 may be preloaded on an electronic device or may be downloaded from a server (e.g., the electronic devices 102 and 104 and the server 106).

The kernel 320 (e.g., the kernel 141), may include a system resource manager 321, or a device driver 323. The system resource manager 321 may perform the control, allocation, or retrieval of a system resource. According to an example of the disclosure, the system resource manager 321 may include a process management unit, a memory management unit, or a file system management unit. The device driver 323, for example, a display driver, a camera driver, a Bluetooth driver, a sharing memory driver, a USB driver, a keypad driver, a Wi-Fi driver, an audio driver, or an inter-process communication (IPC) driver.

The middleware 330 may provide a function that the application 370 requires commonly, or may provide various functions to the application 370 through the API 360 in order to allow the application 370 to efficiently use a limited system resource inside the electronic device. According to an example of the present disclosure, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, and a payment manager 354.

The runtime library 335 may include a library module that a complier uses to add a new function through a programming language while the application 370 is running. The runtime library 335 may perform a function on input/output management, memory management, or an arithmetic function.

The application manager 341 may manage the life cycle of at least one application among the applications 370. The window manager 342 may manage a graphical user interface (GUI) resource used in a screen. The multimedia manager 343 may recognize a format for playing various media files and may encode or decode a media file by using the codec corresponding to a corresponding format. The resource manager 344 may manage a resource, such as a source code, a memory, a storage space, and the like, of at least any one of the applications 370.

The power manager 345 may operate together with a basic input/output system (BIOS) to manage the battery or power and may provide power information necessary for an operation of the electronic device. The database manager 346 may create, search, or modify a database used in at least one application among the applications 370. The package manager 347 may manage the installation or update of an application distributed in a package file format.

The connectivity manager 348 may manage a wireless connection, such as Wi-Fi or Bluetooth. The notification manager 349 may display or provide an event, such as arrival messages, appointments, and proximity alerts to a user in a manner of not interrupting the user. The location manager 350 may manage location information on an electronic device. The graphic manager 351 may manage a graphic effect to be provided to a user or a user interface (UI) relating thereto. The security manager 352 may provide various security functions necessary for system security or user authentication. According to an example of the present disclosure, when an electronic device (e.g., the electronic device 101) includes a phone function, the middleware 330 may further include a telephony manager for managing a voice or video call function of the electronic device. The payment manager 354 may relay information for payment from the application 370 to the application 370 or the kernel 320. Additionally, information relating to payment received from an external device may be stored in the electronic device or information stored therein may be delivered to an external device.

The middleware 330 may include a middleware module for forming a combination of various functions of the above-mentioned components. The middleware 330 may provide a module specialized for each type of OS to provide differentiated functions. Additionally, the middleware 330 may delete part of existing components or add new components dynamically.

The API 360 (e.g., the API 145), as a set of API programming functions, may be provided as another configuration according to OS. For example, in the case of Android or iOS, one API set may be provided for each platform and in the case of Tizen, at least two API sets may be provided for each platform.

The application 370 (e.g., the application program 147) may include at least one application for providing functions, such as a home 371, a dialer 372, a short message service (SMS)/multimedia messaging service (MMS) 373, an instant message 374, a browser 375, a camera 376, an alarm 377, a contact 378, a voice dial 379, an e-mail 380, a calendar 381, a media player 382, an album 383, a clock 384, payment 385, health care (e.g., measure an exercise amount or blood sugar), or environmental information provision (e.g., provide air pressure, humidity, or temperature information).

The application 370 includes an application (hereinafter referred to as "information exchange application") for supporting information exchange between the electronic device (e.g., the electronic device 101) and an external electronic device (e.g., the electronic device 102 or 104). The information exchange application may include a notification relay application for relaying specific information to the external device or a device management application for managing the external electronic device.

The notification relay application may have a function for relaying to an external electronic device (e.g., electronic devices 102 and 104) notification information occurring from another application (e.g., an SMS/MMS application, an e-mail application, a health care application, or an environmental information application) of the electronic device. Additionally, the notification relay application may receive notification information from an external electronic device and may provide the received notification information to a user.

The device management application may manage (e.g., install, delete, or update) at least one function (turn-on/turn off of the external electronic device itself (or some components) or the brightness (or resolution) adjustment of a display) of an external electronic device (e.g., the electronic devices 102 and 104) communicating with the electronic device, an application operating in the external electronic device, or a service (e.g., call service or message service) provided from the external device.

According to an example, the application 370 may include a specified application (e.g., a health care application of a mobile medical device) according to the property of an external electronic device (e.g., the electronic devices 102 and 104). According to an example, the application 370 may include an application received from an external electronic device (e.g., the server 1086 or the electronic device 102 or 104). The application 370 may include a preloaded application or a third party application downloadable from a server. The names of components in the program module 310 according to the shown example may vary depending on the type of OS.

According to various examples of the present disclosure, at least part of the program module 310 may be implemented with software, firmware, hardware, or a combination thereof. At least part of the programming module 310 may be implemented (e.g., executed) by a processor (e.g., the processor 120). At least part of the programming module 310 may include a module, a program, a routine, sets of instructions, or a process to perform at least one function, for example.

The term "module" used in various examples of the present disclosure, for example, may mean a unit including a combination of at least one of hardware, software, and firmware. The term "module" and the term "unit", "logic", "logical block", "component", or "circuit" may be interchangeably used. A "module" may be a minimum unit or part of an integrally configured component. A "module" may be a minimum unit performing at least one function or part thereof. A "module" may be implemented mechanically or electronically. For example, "module" according to various examples of the present disclosure may include at least one of an application-specific IC (ASIC) chip performing certain operations, field-programmable gate arrays (FPGAs), or a programmable-logic device, all of which are known or to be developed in the future.

FIG. 4 is a view illustrating a payment system according to a comparative example.

Referring to FIG. 4, a payment system 400 includes an electronic device 410 and may include a server. The server may include a payment server 420, a token server (e.g., a token service provider) 430, or a financial server (e.g., an issuer) 440. The electronic device 410 includes a payment application (e.g., a wallet application) 412 and may include a payment manager 414. The payment server 420, for example, may include a payment service server 422 and/or a token requester server (e.g., a token requester) 424.

According to an example of the present disclosure, the payment application 412 may include a Samsung Pay™ Application. The payment application 412 may provide a payment related UI user experience (UX). The payment related UI may include wallet UI/UX. The payment application 412 may provide a UI relating to card registration, payment, or transaction. The payment application 412 may provide an interface relating to a character reader (e.g., an optical character reader/recognition (OCR)) or an external input (e.g., a user input). Additionally, the payment application 412 may provide a user authentication related interface through identification and verification (ID&V).

According to an example, the payment application 412 may perform payment transaction. For example, the payment application 412 may provide a payment function to a user through Simple Pay, Quick Pay, or specified application execution. A user may perform a payment function by using the payment application 412 and receive information relating to the payment function.

According to an example, the payment manager 414 may include card company related information. For example, the payment manager 414 may include a card company software development kit (SDK).

According to an example, the payment server 420 may include a management server for electronic payment or mobile payment. The payment server 420 may receive payment related information from the electronic device 410 and transmit the payment related information to the outside or process the payment related information directly in the payment server 420.

According to an example, the payment server 420 may transmit/receive information between the electronic device 410 and the token server 430 by using the payment service server 422 and/or the token requester server 424. The payment service server 422 may include the payment server 420 (e.g., a Samsung payment server). The payment service server 422 may manage card information linked to a service account (e.g., Samsung account) or a user account. Additionally, the payment server 422 may include an API server relating to the payment application 412. The payment service server 422 may provide an account management module (e.g., account integration or Samsung account integration).

According to an example, the token requester server 424 may provide an interface for processing payment related information. For example, the token requester server 424 may perform the issue, deletion, or activation of payment related information (e.g., a token). Alternatively, the token requester server 424 may be functionally connected to the payment manager 414 and control information necessary for the payment.

According to an example, the payment application 412 in the electronic device 410 may be functionally connected to the payment service server 414 in the payment server 420. For example, the payment application 412 receives and may transmit payment related information to/from the payment server 420. According to an example, the payment manager 414 in the electronic device 410 may be functionally connected to the token requester server 424 in the payment server 420. For example, the payment manager 414 may transmit/receive payment related information to/from the token requester server 424.

According to an example, the token server 430 may issue payment related information (e.g., a token) or manage payment related information. For example, the token server 430 may control the life cycle of a token and the life cycle may include a generation, modification, or deletion function. Additionally, the token server 430 may include a token management server and may perform token provisioning, ID&V, replenishment, or life cycle management. The token server 1830 may also perform the integration of financial server related information.

According to an example, the payment server 420 and/or the token server 430 may be located in the same or similar area or located in separated areas. For example, the payment manager 420 may be included in a first server and the token server 430 may be included in a second server. Additionally, the payment manager 420 and/or the token server 430 may be separately implemented in one server (e.g., a first server or a second server).

According to an example, the financial server 440 may perform card issue. For example, the financial server 440 may include a card issue bank. Additionally, the financial server 440 may generate information necessary for payment provided to a user. The user may store the information necessary for payment, which is generated from the financial server 440, in the electronic device 410 by using the payment application 412. The financial server 440 may also transmit/receive the information necessary for payment to/from the token server 430 by functionally connecting to the token server 430.

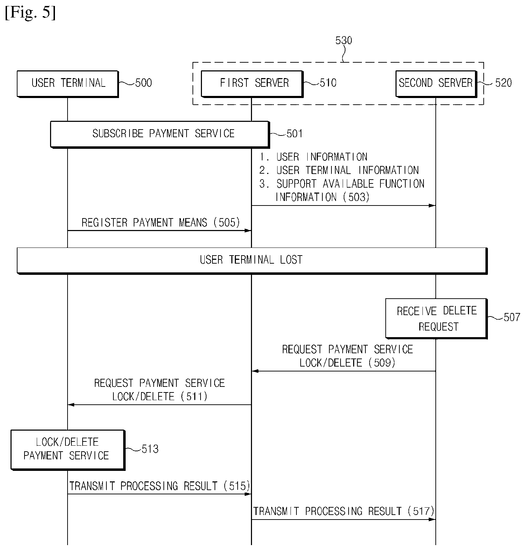

FIG. 5 is a view illustrating a payment service subscription and payment server lock/delete process between a user terminal and a server according to a comparative example.

Referring to FIG. 5, a user terminal 500 may communicate with a first server 510. The first server 510 may receive user information and device information of the user terminal 500, from the user terminal 500. For example, the first server 510 may correspond to a payment server or a payment service providing server, which relates to a payment application installed on the user terminal 500. When the payment application installed on the user terminal 500 is executed and information necessary for payment service subscription is inputted from a user, the user terminal 500 may transmit the information necessary for payment service subscription to the first server 510 in operation 501. For example, the user terminal 500 may transmit user account information, user terminal information, the version information of a payment application, and user authentication information, to the first server 510.

When payment service subscription is completed the first server 510 may transmit, to the second server 520, user (account) information, user terminal information, and support available function information with respect to the user account and the user terminal 500 in operation 503. For example, the first server 510 may transmit, to the second server 520, the identification information (e.g., a globally unique identifier (GUID)) of a user account (e.g., Samsung Account) and the identification information (e.g., an international mobile station equipment identifier (IMEI)) of a payment device (e.g., the user terminal 500), and additionally deliver, to the second server 520, both the version information and a provided function of a payment service (e.g., a payment application) that a user uses.

According to an example, the second server 520 may be a server (e.g., a find my mobile server (FMMS)) for providing a payment service related webpage. The second server 520 may provide a menu relating to remote control of the user's terminal 500 and a menu relating to control of a payment function through a webpage. The second server 520 may determine a function that is displayed or provided on a webpage according to the support available function information obtained in operation 503.

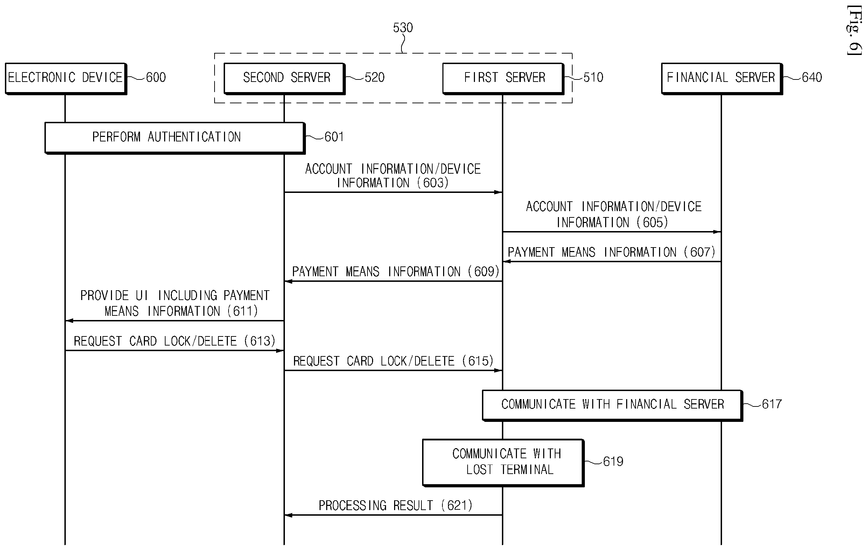

According to an example, the first server 510 and the second server 520 may be understood as one server or a plurality of servers 530 that operate by the same management subject. When the first server 510 and the second server 520 are one server 530, operations 503, 509, and 517 may be understood as operations performed inside the server 530 or omitted. The above-mentioned description may be applied to operations 603, 609, 615, and 621 of FIG. 6.

In operation 505, the user terminal 500 may register a payment means to be used in a payment application, to the first server 510. For example, the user terminal 500 may transmit, to the server 510, financial institute information (e.g., card company information) and payment information (e.g., credit card information). Payment information may mean payment means related information (e.g., a (credit) card number, a CVD number, an expiration date, and the like). The server 510 may check some of information obtained from the user terminal 500 by communicating with a financial server (e.g., the financial server 440 of FIG. 4 or the financial server 640 of FIG. 6) or obtain information such as payment information from a financial server, based on the information obtained from the user terminal 500. According to an example of the present disclosure, operation 505 may be performed before operation 503.

As in a case that a user terminal is lost, when a user is not able to locate the user terminal 500 or control the user terminal, the user may access the second server 520 or a webpage provided from the second server 520 by using another electronic device, and request the locking or deletion of a payment means registered to the user terminal 500 in operation 507. When the lock or delete request is received in operation 509, the second server 520 may transmit the lock or delete request for a payment server (or a payment means) to the first server 510. In operation 511, the first server 510 may request payment service lock or delete from the user terminal 500.

In operation 513, the user terminal 500 may perform processing to lock/delete a payment means or lock a payment application according to the lock/delete request received from the first server 510. In operation 515, the user terminal 500 may transmit a processing result to the first server 510. The first server 510 may transmit the processing result to the second server 520 in operation 517 in order to allow a user who requests lock/delete to check the processing result on a webpage.

A specific operating flow for each operation and a UI are described below with reference to FIGS. 6 to 13.

FIG. 6 is a view illustrating a process for controlling a payment function with respect to a lost terminal according to a comparative example.

Referring to FIG. 6, a lost terminal may correspond to the user terminal 500 described with reference to FIG. 5. In the description below, the lost terminal is described using the same reference number 500 as the user terminal above.

In operation 601, the electronic device 600 may access a second server 520 (e.g., an FMMS) and perform authentication. For example, the electronic device 600 may perform user authentication by inputting the same user account information used in the lost terminal 500 on a webpage provided from the second server 520. The electronic device 600 may be an arbitrary electronic device that accesses a service (e.g., a webpage) provided from the second server 520. For example, the electronic device 600 may correspond to a desktop PC, a laptop, a tablet, a smartphone, or a wearable device.

In operation 603, the second server 520 may provide user account information obtained from an authentication result and information on the user terminal (e.g., the lost terminal) 500.

In operation 605, the first server 510 may provide user account information to a financial server 640. The user account information provided to the financial server 640 may correspond to unique identification information (e.g., a unique ID) corresponding to user account information registered to a payment application. According to an example, the first server 510 may provide information on the user terminal 500 together with user account information to a financial server 640. For example, the first server 510 may transmit, to the financial server 640, unique identification information generated based on both user account information registered to a payment application and information of a device (e.g., the user terminal 500) corresponding to the user account. When a user registers payment information of different financial companies to a payment application, the first server 510 may provide user account information/user terminal information to each of the plurality of financial servers 640. Account information/device information provided to the financial server 640 in operation 605 may be understood as identification information corresponding to a payment means installed on the user terminal 500.

In operation 607, the first server 510 may obtain payment information registered as a user account from the financial server 640. According to an example, the first server 510 may obtain payment information registered to the user terminal 500 with respect to a user account from the financial server 640. In this case, the first server 510 may provide payment information obtained from the financial server 640, to the second server 520 as it is. For example, when the user terminal 500 registers a payment means, the first server 510 may assign one unique identification information to "a user account + a payment device (e.g., the user terminal 500)", and register a payment means to the unique identification information. When the first server 510 queries a payment means with respect to the financial server 640, the first server 510 may query a registered payment means list by using the unique identification information. However, according to another example, the first server 510 may obtain all payment information, which is registered to the financial server 640 as a user account, from the financial server 640. For example, in operation 605, when the first server 510 provides only user account information and does not provide device information, all payment information may be obtained. In this case, in operation 609, the first server 510 may provide, to the second server 520, only payment information, which is determined to be registered to the user terminal 500, among obtained payment information.

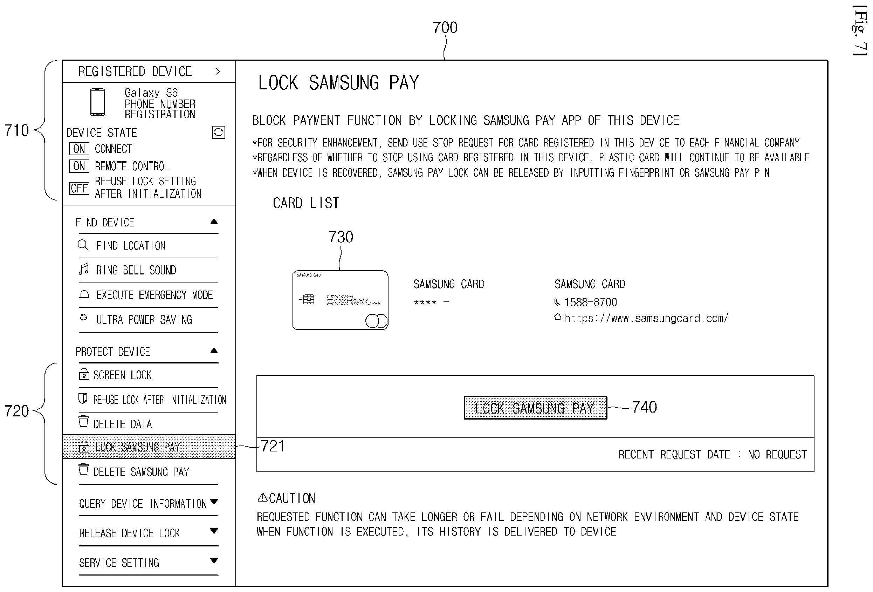

When obtaining payment information from the first server 510, the second server 520 may provide a UI including the payment information to the electronic device 600 in operation 611. For example, as shown in FIG. 7, a webpage 700 may be provided to the display of the electronic device 600.

FIG. 7 is a view illustrating a card lock request screen according to a comparative example.

Referring to FIG. 7, the webpage 700 may include state information 710 on the user terminal 500 and a menu for support available functions determined in operation 503, such as menus for a device search function or a device protection function 720. The device protection function 720 may include a screen lock menu for changing the screen of the lost terminal 500 into a lock state, an after-initialization reuse lock menu for preventing a reuse after initializing the lost terminal 500, a data delete menu for deleting all data of the lost terminal 500, a payment function lock 710 (e.g., Samsung Pay lock) menu for deactivating a payment function of the lost terminal 500, and a payment function delete (e.g., Samsung Pay delete) menu for deleting a payment function (e.g., a payment application).

The webpage 700 may provide a list (e.g., a card list) 730 about a control available payment means, based on the payment information obtained in operation 609. If the list 730 includes information on a plurality of payment means, a menu for locking/deleting each payment means may be provided. For example, after a payment means to be locked/deleted is selected from a plurality of payment means, when a lock/delete menu 740 is selected, a process after operation 613 may be performed on the selected payment means. However, according to an example of the present disclosure, instead of supporting a lock/delete function for each payment means, only a lock/delete function for all payment means registered to the lost terminal 500 may be supported. In the description below, the expression "payment means" may be replaced with a card that supports a payment function. The card that supports a payment function may include all kinds of cards that are registered to the user terminal 500 and perform a payment function, such as credit cards, debit cards, prepaid charge cards, and membership/mileage cards and coupons.

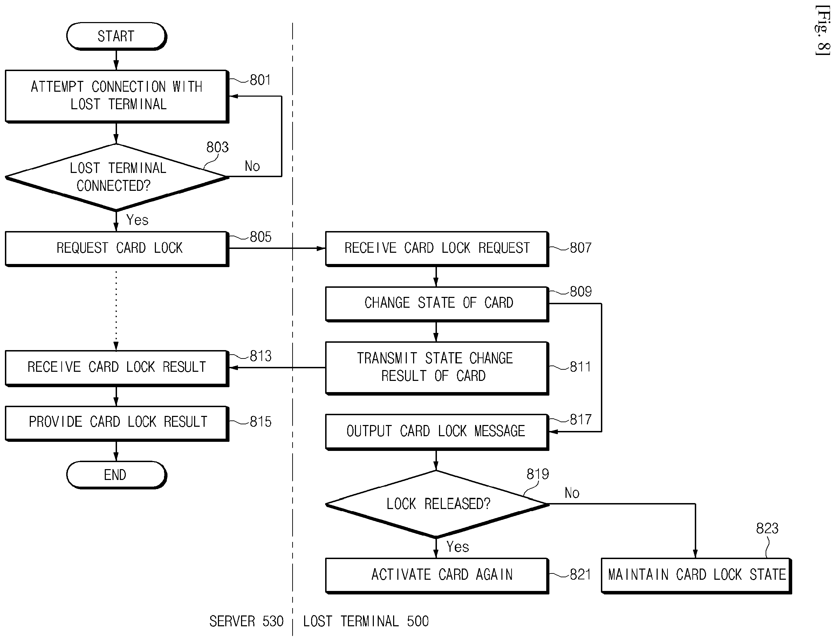

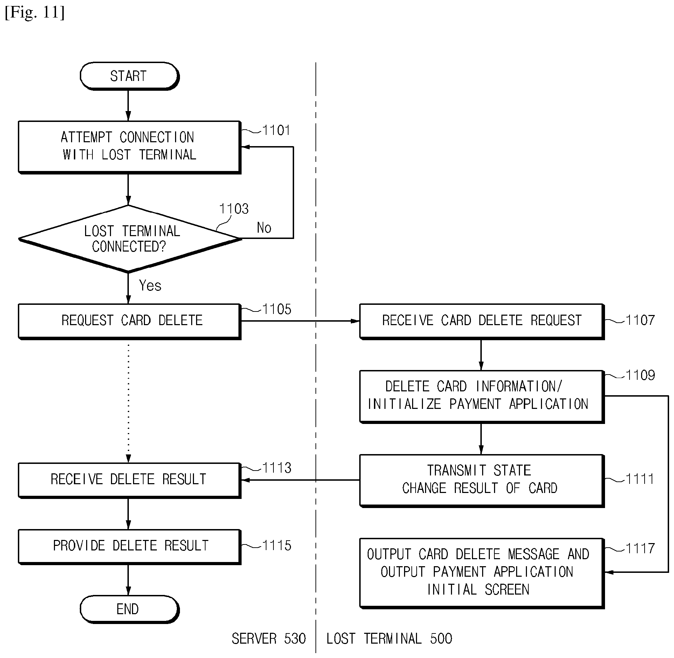

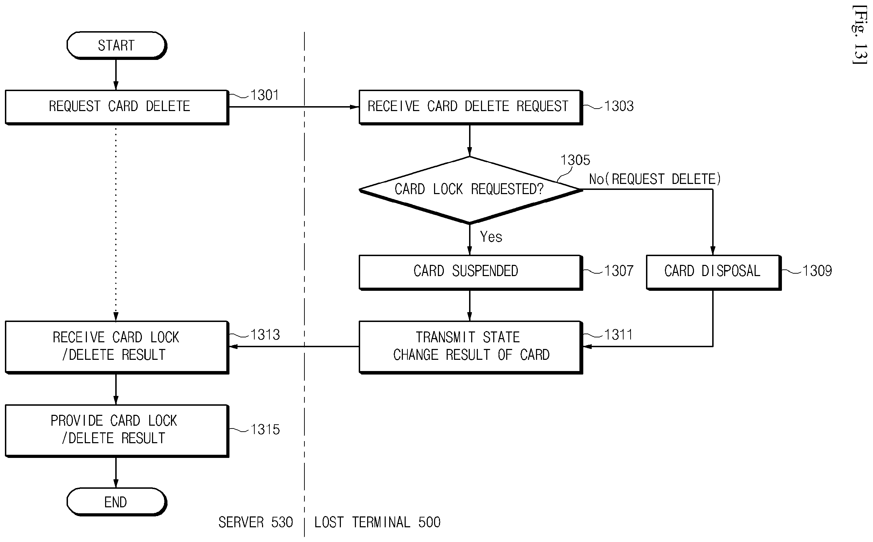

In operation 613, the electronic device 600 may transmit a card lock or delete request to the second server 520. For example, when the lock/delete menu 740 is selected by a user, the electronic device 600 may transmit a lock/delete request for the selected or all cards to the second server 520 in operation 615. The second server 520 may again transmit the lock/delete request for the selected or all cards to the first server 510. The first server 510 may request a state change for a requested payment means in communication with the financial server 640 in operation 617. Additionally, the first server 510 may command the deactivation or deletion for a payment in communication with the lost terminal 500 in operation 619. A detailed process relating to operation 619 is described below with reference to FIGS. 8 and 11 and a detailed process relating to operation 617 is described below with reference to FIG. 13. When a processing result for a request is obtained from the financial server 640 and/or the lost terminal 500, the first server 510 may provide the processing result to the second server 520 in operation 621. The second server 520 may provide the processing result in a format such as a webpage, to the electronic device 600.

A server (e.g., the server 530) for performing the process of FIG. 6 may be implemented as follows. The server 530 may include a control module and a communication interface for communicating with the user terminal 500, the electronic device 600, and the financial server 640. The server 530 may perform obtaining user information from the electronic device 600, obtaining payment information from the financial server 640 based on the user information, providing the payment information to the electronic device 600, receiving a stop or deactivation request for the payment information, and transmitting the stop or deactivation request for the payment information to the user terminal 500 and the financial server 640.

FIG. 8 is a view illustrating a process for performing card lock between a server and a lost terminal according to a comparative example.

Referring to FIG. 8, the process shown may correspond to a process performed between the server 530 (e.g., the first server 510) and the lost terminal 500 in operation 621 when the server 530 receives a card lock request from the electronic device 600.

Referring to FIG. 8, in operation 801, the server 530 may attempt communication connection to the lost terminal 500. When communication connection to the lost terminal 500 is successful in operation 803, the server 530 may transmit a card lock request to the lost terminal 500 in operation 805. If communication connection to the lost terminal 500 is not successful in operation 803, the server 530 may repeat the connection attempt of operation 801. In this case, the server 530 may provide a message that the lost terminal 500 is not connected to the electronic device 600. When the server 530 is not connected to the lost terminal 500 or a response for a card lock request or delete request described later is not received, the server 530 may request a response for a request through push for a specified period (e.g., one year).

In operation 807, the lost terminal 500 may receive a card lock request from the server 530. FIG. 8 illustrates a case that a control command received from the server 530 is a card lock request. A case that a control command received from the server 530 relates to card deletion or application deletion is described below with reference to FIG. 11.

A user may lose the lost terminal 500 or the lost terminal 500 may be seized or robbed by others. Accordingly, a card lock request received from the server 530 may not provide any notification through the display of the lost terminal 500, or sound or vibration.

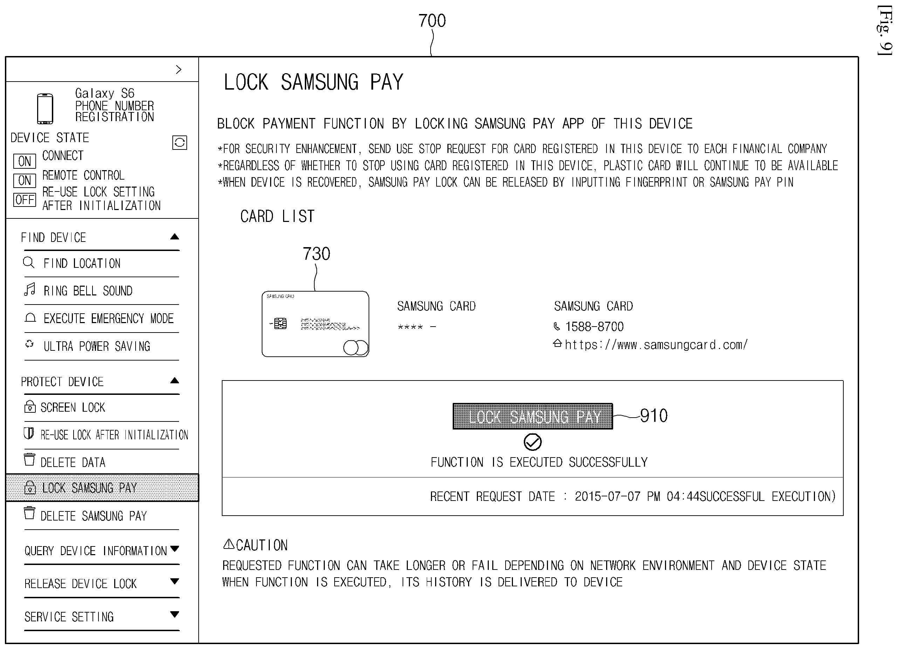

A control command (e.g., a card lock request) received from the server 530 may be received together with authorization information for accessing data of the lost terminal 500 or changing its setting. In operation 809, the lost terminal 500 may change a state of a card based on the received card lock request. For example, the lost terminal 500 may change a payment available state to a payment unavailable state with respect to a card registered to a payment application or may perform processing to hide a corresponding card invisibly even if a payment application is executed. For example, the lost terminal 500 may set a flag corresponding to a lock or inactive state in payment information (e.g., card information) or set a key value corresponding to payment information with a different value. After changing the state of the card, the lost terminal 500 may transmit a result on the state change of the card in operation 811 to the server 530 and output a card lock message to the display of the lost terminal 500. Screens according to operation 811 and operation 817 are described below with reference to FIGS. 9 to 10c, respectively.

FIG. 9 is a view illustrating a card lock result screen according to a comparative example.

Referring to FIG. 9, on the webpage 700 described with reference to FIG. 7, an area corresponding to the lock/delete menu 740 may be replaced with a result screen 910 (e.g., Samsung Pay lock) according to a lock request. For example, in operation 813, the first server 510 may receive a result on a state change (e.g., card lock) of a card from the lost terminal 500 and provide a card lock result to the second server 520. In operation 815, the second server 520 may provide the card lock result to the electronic device 600 (e.g., a webpage that the electronic device 600 accesses). Although not shown in the drawing, in the example of FIG. 9, the webpage 700 may additionally provide a menu for releasing a card lock.

Although a screen for card lock request and a card lock result screen according to an example are shown in FIGS. 7 and 9 respectively, according to various examples, in addition to a lock request and a lock result screen, the webpage 700 may include a menu/screen for providing various information such as a delete request, a delete result, an initialization request, an initialization result, and a request standby from the lost terminal 500 (e.g., a lock/delete request standby).

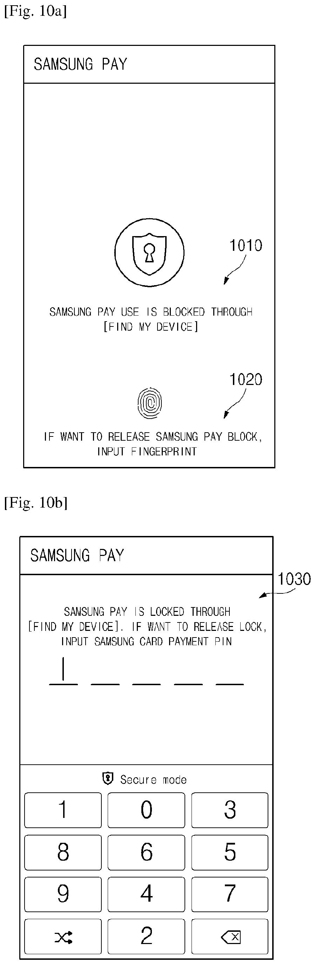

In operation 817, the lost terminal 500 may output a card lock message. This will be described below with reference to FIGS. 10a and 10b.

FIGS. 10a to 10c are views illustrating a card lock message according to a comparative example.

Referring to FIG. 10a, when a card changes into a lock state by a control command from the server 530 in operation 809, a lock release screen for releasing the lock state may be outputted. The lock release screen may include a message 1010 indicating that a payment function in a lost terminal is in a lock state through a server (e.g., Samsung Pay use is blocked through [find my device]) and a message 1020 providing a method of releasing a lock state and restoring a payment function (e.g., input fingerprint to release Samsung Pay block or enter a PIN as shown in FIG. 10b). However, according to an example of the present disclosure, the message 1020 for guiding a method of restoring a payment function may not be provided from the lost terminal 500. When a user retrieves the lost terminal 500, the payment function of the user terminal 500 may be restored by accessing the second server 520 again and selecting a lock release menu for payment function.

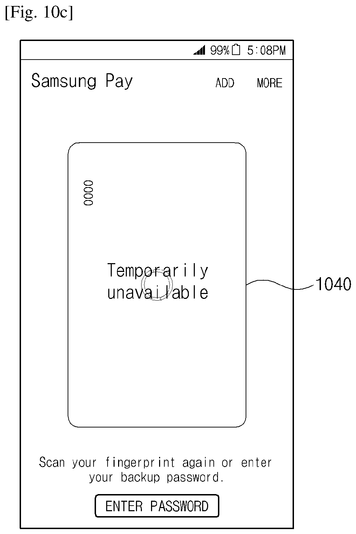

According to an example, when a specific card changes into a lock state, for example, in a case that the financial server 640 suspends a card or is in a state of providing a request to suspend a card, the lost terminal 500 may display a card changed into a lock state as shown in FIG. 10c. For example, among at least one payment information registered to a payment application, when specific payment information is suspended or deactivated, a display may output information 1040 indicating that a corresponding card is temporarily unavailable when a payment application is executed.

According to an example, a lock state may be released by recognizing biometric information pre-registered to the lost terminal 500. For example, the lock screen may include a message 1030 for guiding a method of restoring a payment function through password and a user may release a card lock state by inputting user's fingerprint information or iris information pre-registered to the lost terminal 500 and restore a payment function. According to another example, a lock state may be released by inputting a pre-registered password or lock release pattern to the lost terminal 500. For example, a payment function may be restored through the input of a password (or a number) pre-registered to the lost terminal 500 or a touch input pattern for lock release.

Referring to FIG. 8 again, in operation 819, the lost terminal 500 may determine whether the lock of a payment function is released by a user input for a card lock message. If the lock state of a card is released, the lost terminal 500 may activate the card again in operation 821. If a user inputs wrong password or different biometric information, the lost terminal 500 may determine that the lock is not released and maintain the lock state of the card in operation 823.

According to an example, the user terminal 500 for performing the process of FIG. 8 includes communication module, a memory storing a payment application and payment information relating to the payment application, and a processor for providing a payment function by using the payment application. The processor deactivates the payment application or the payment function, based on a control command received from a server.

FIG. 11 is a view illustrating a process for performing card deletion between a server and a lost terminal or the replacement of the payment application by a dummy application according to an example of the present disclosure.

Referring to FIG. 11, when the server 530 receives a card delete or payment application initialization request from the electronic device 600 in FIG. 6, the process shown in FIG. 11 may correspond to a process performed between the server 530 and the lost terminal 500. Additionally, operation 1101 and operation 1103 may correspond to operation 801 and operation 803 of FIG. 8, respectively. Hereinafter, description for contents overlapping or corresponding to or similar to the content described with reference to FIG. 8 may be omitted.

In operation 1105, the server 530 may transmit a card delete request to the lost terminal 500. When receiving a delete request for at least one card or entire cards from the server 530 in operation 1107, the lost terminal 500 may delete card information or replace the payment application by a dummy program in operation 1109. For example, when a control command for deleting all payment information registered to the payment application of the lost terminal 500 is received or deletion for some payment means is not supported (e.g., when a control command itself includes a command for initializing a payment application), the lost terminal 500 may replace the payment application by a dummy program and may include deleting all payment information (e.g., token information or information necessary for generating a token) relating to a payment application, or deleting all data (e.g., user account information or setting information) relating to a payment application.

According to an example of the present disclosure, when a control command for instructing the deletion of some of a plurality of cards registered to a payment application is received, the lost terminal 500 may delete card information on a corresponding card. When all or part of a card is deleted or the replacement of the payment application by a dummy application is completed, the lost terminal 500 may transmit a state change result of a card to the server 530 in operation 1111. The state change result of the card may include a list of deleted cards. The server 530 may receive a deletion result in operation 1113. According to an example of the present disclosure, when receiving the deletion result of a card (e.g., a token corresponding to a card), the server 530 may transmit corresponding content to the financial server 640. In operation 1115, the server 530 may provide a result on the deletion of a card or the replacement of the payment application by a dummy application through the webpage 700.

According to an example of the present disclosure, when card information is deleted, the lost terminal 500 may output a card delete message or the initial screen of a payment application to a display in operation 1117. Unlike a case that the card changes into the lock state in operation 809, when the card is deleted or the application is replaced by a dummy application, since the card cannot be used before the card is re-issued or re-registered through the financial server 640, operation 1117 may be performed selectively. For example, a notification may not be provided to the display of the lost terminal 500 even if the card is deleted or the application is initialized.

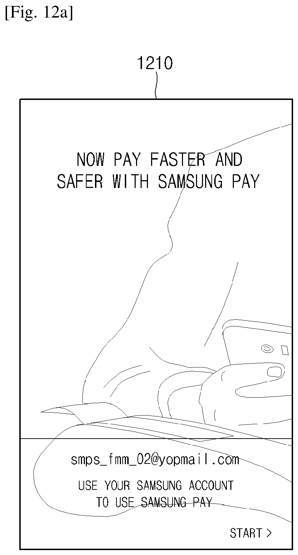

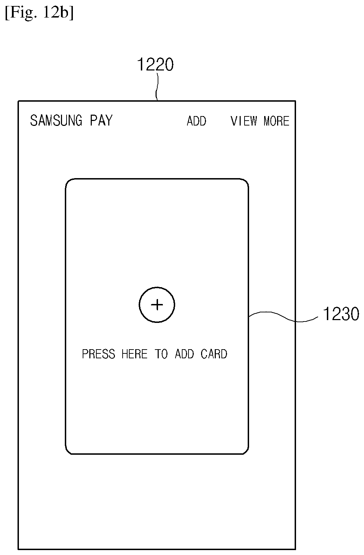

FIGS. 12a and 12b are views illustrating a screen of an initialized payment application and a card add screen according to a comparative example.

Referring to FIGS. 12a and 12b, if the payment application is executed or payment is attempted by another user other than the original owner of the lost terminal 500, the lost terminal 500 may provide an execution screen 1210 of the initialized payment application as shown in FIG. 12a. Even if the payment application is not initialized, since card information for payment is deleted, when the payment application is executed, as shown in FIG. 12b, the lost terminal 500 may display a card addition screen 1220 for payment including an icon 1230 to allow the addition of a new card.

In the description referring to FIG. 11, there is performed replacement of the payment application by a dummy program The replacement by a dummy application may be performed when an arbitrary user who obtains the lost terminal 500 executes a payment application, another application (e.g., an application for providing a message that the current payment function is unavailable or an application including only a termination button without any message on a screen) other than the payment application is substituted.

In the description referring to FIGS. 8 to 12b, the lost terminal 500 may perform the following operation. For example, an operation for locking all or part of card information, an operation for deleting some of card information, an operation for deleting all card information, an operation for locking a payment application, and operations for initializing a payment application may be performed by the lost terminal 500. The card information may be understood as payment information. Additionally, the payment information may correspond to token information for allowing payment in communication with the financial server 400 when the payment is performed by using the user terminal 500 or user and/or terminal information stored in the user terminal 500 in order for token information generation. According to an example of the present disclosure, since token information is stored in the user terminal 500, corresponding token information may be used each time payment is made. Deleting/locking payment information or card information may correspond to deleting/deactivating token information. According to another example of the present disclosure, each time payment is performed, a new token may be generated from the token server 430.

According to an example of the present disclosure, the user terminal 500 requests a new token each time payment is performed, and after storing this token in a memory temporarily, deletes the token as payment using the token is performed. In order to generate such a token, information such as a card identifier (ID), a device ID, and a master ID (e.g., an ID managed by the server 530 during initial card registration) may be stored as payment information in a memory of the user terminal 500.

As described in FIG. 6, when a lock or delete request for a payment means is received from the electronic device 600, the server 530 a control command to the lost terminal 500 and also transmit a state change request for a corresponding payment means to the financial server 640. For example, when the lost terminal 500 is used by a malicious user, cellular network or Wi-Fi network may be deactivated in order to prevent the malicious user from remotely controlling the lost terminal 500. When the server 540 requests a lock/delete request for a corresponding payment means with respect to the financial server 640, this may prevent a payment from progressing even if a malicious user makes a payment with respect to the financial server 640 through a POS terminal of a store by using payment information of the lost terminal 500. A process relating to this is described with reference to FIG. 13.

FIG. 13 is a view illustrating a process for performing card lock/delete between a server and a financial server according to a comparative example. The process shown in FIG. 13 may correspond to a process performed between the server 530 and the financial server 640 in operation 619 when there is a card lock request from the electronic device 600 to the server 530.

Referring to FIG. 13, in operation 1301, the server 530 may transmit a lock or delete request for a card to the financial server 540. For example, in operation 613, when there is a lock or delete request for part of a card, the server 530 may transmit a lock/delete request for a lock or delete requested card to the financial server 640. However, according to another example, the server 530 may transmit, to the financial server 640, a lock/delete request for all cards corresponding to a user account or unique identification information defined by the user account and payment device information, that is, all cards registered in the lost terminal 500.

In operation 1303, the financial server 640 may receive a card lock or card delete request. When it is determined that a request from the server 530 is a card lock request in operation 1305, the financial server 640 may change a card into a suspended state in operation 1307. When the card is suspended, a payment using a corresponding card may be unavailable from a suspended time point to a time point that the suspension is released. For example, when the card is lock-released in operation 819, the server 530 may provide information that the card is lock-released to the financial server 640 and change the suspended state of the card into an activation state.

When the request received from the server 530 is not a card lock request, (i.e., when a card delete request is received from the server 530), the financial server 640 may change the card into a disposal state in operation 1309. When the card changes into the disposal state, a payment using a corresponding card is unavailable and of course, a corresponding card cannot be used again until a user registers a card again or receives a re-issued card. Even if a corresponding card is re-registered or re-issued, a card number before disposal may be different from the card number of a re-registered/re-issued card.

In operation 1311, the financial server 640 may transmit a state change result of the card to the server 530 based on a result of operation 1307 or a result of operation 1309. The server 530 may receive a lock/disposal result of a card from the financial server 640 in operation 1313 and may provide the lock/disposal result of a card to the webpage 700 in operation 1315. According to an example of the present disclosure, the server 530 (e.g., the second server 520) may distinguish a lock/delete processing result of a card in the lost terminal 500 and a lock/disposal processing result of a card in the financial server 500 and provide them. For example, during holidays or the inspection of the financial server 640, a payment function may be deactivated in the lost terminal 500 but the financial server 640 may wait for processing. As another example, the lost terminal 500 may not respond to a control command but the lock/disposal of a card may be completed in the financial server 640. These results may be provided to the webpage 700.

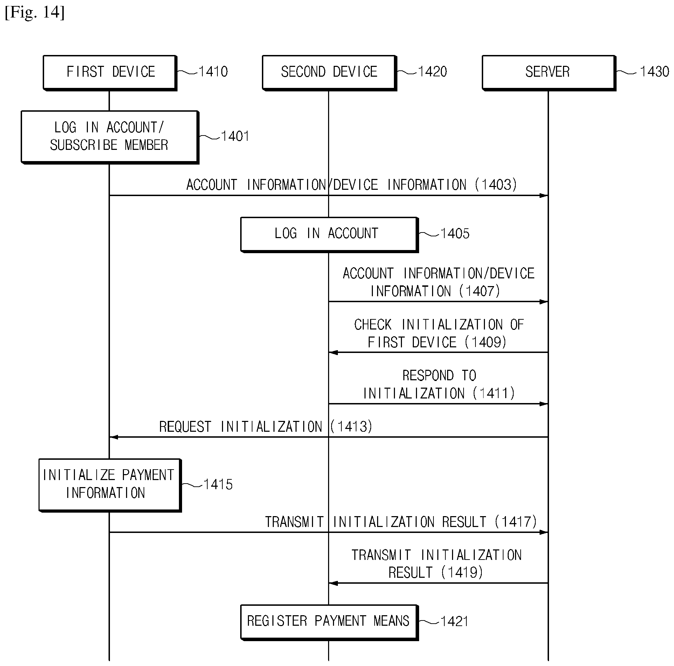

FIG. 14 is a view illustrating a process for replacing a payment terminal according to a comparative example.

Referring to FIG. 14, the illustrated process may correspond to a process that a user, who uses a payment function through a first device 1410, changes a device that is to use a payment function to a second device 1420. The example of FIG. 14 may be applied to a case that the first device 1410 is lost. A description for the above lost device 500 may be applied to the first device 1410.

Referring to FIG. 14, in operation 1401, a user of the first device 1410 may install a payment application to the first device 1410 and perform a login/member subscription with a user account. In operation 1403, the first device 1410 may transmit the user account information and device information of the first device 1410 to a server 1420. Herein, the server 1430, for example, may correspond to the first server 510. Additionally, information on at least one payment means used for a payment may be registered to the first device 1410.

According to an example, a user may perform a payment by using the second device 1420. For example, in operation 1405, a payment application may be installed on the second device 1420 and log in with the same user account registered in the first device 1410. In operation 1407, the second device 1420 may transmit user account information and device information of the second device 1420 to the server 1430.

When receiving the user account information and the device information of the second device 1420, the server 1430 may check that the user account information and the device information do not correspond to a previously registered user and device information. In operation 1409, the server 1430 may determine whether the payment information of the first device 1410 or the payment application is initialized from the second device 1420. In this case, the server 1430 may perform an authentication for payment information (e.g., a password set with respect to a payment means or a password set in a payment application). In operation 1411, the second device 1420 may respond to initialize the payment information of the first device 1410.

In operation 1413, the server 1430 may request the initialization of the payment information or the payment application from the first device 1410. When the initialization request is received, the first device 1410 may initialize the payment information (or the payment application) in operation 1415 and transmit an initialization result to the server 1430 in operation 1417. In operation 1419, the server 1430 may transmit the initialization result to the second device 1420 again. When receiving the initialization result from the server 1430, the second device 1420 may output information that the payment means of the first device 1410 is deleted. Additionally, in operation 1421, an operation for registering a payment means to be used in the second device 1420 may be performed. The operation, for example, may correspond to operation 505 of FIG. 5.

According to various examples of the present disclosure, at least part of a device (e.g., modules or functions thereof) or a method (e.g., operations), as in a form of a programming module, may be implemented using an instruction stored in computer-readable storage media. When at least one processor (e.g., the processor 120) executes an instruction, it may perform a function corresponding to the instruction. The non-transitory computer-readable storage media may include the memory 130, for example.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a ROM, a RAM, compact disc-ROMs (CD-ROMs), magnetic tapes, floppy disks, and optical data storage devices. In addition, functional programs, code, and code segments for accomplishing the present disclosure can be easily construed by programmers skilled in the art to which the present disclosure pertains.

At this point, it should be noted that the various examples of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various examples of the present disclosure as described above. Alternatively, one or more processors operating in accordance with stored instructions may implement the functions associated with the various examples of the present disclosure as described above. If such is the case, it is within the scope of the present disclosure that such instructions may be stored on one or more non-transitory processor readable media. Examples of the non-transitory processor readable media include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

A module or a programming module according to various examples of the present disclosure may include at least one of the above-mentioned components, or may further include another component. Operations performed by a module, a programming module, or other components according to various examples of the present disclosure may be executed through a sequential, parallel, repetitive or heuristic method. Additionally, some operations may be executed in a different order. Alternatively, other operations may be added. Moreover, the examples disclosed in this specification are suggested for the description and understanding of technical content but do not limit the range of the present disclosure.

## Claims

1. An electronic device (201) for supporting a payment function, the electronic device comprising:
a communication module (220);
at least one memory (230) storing a payment application; and
a processor (210) electrically connected to the memory (230) and the communication module (220),
wherein the memory (230) stores instructions adapted, when executed, to cause the processor (210) to:
receive, by the payment application, payment information from an external device via the communication module (220) and store, by the payment application, the received payment information in the memory (230),
receive a deactivation request of at least one of the payment application and the payment information from the external device via the communication module (220),
in response to the request, deactivate the at least one of the payment application and the payment information, and
replace the payment application with a dummy program corresponding to the payment application.

2. The electronic device (201) of claim 1, further comprising:
a display (260),
wherein the instructions are further adapted, when executed, to cause the processor to:
when the payment function is deactivated,
provide a display relating to the deactivation through the display (260).

3. The electronic device (201) of claim 2, wherein the instructions are further adapted, when executed, to cause the processor to display a lock release screen for restoring the at least one of the payment application and the payment information on the display (260).

4. The electronic device (201) of claim 1, wherein the instructions are further adapted, when executed, to cause the processor to:
when user biometric recognition information or password predefined in the electronic device is inputted, restore the at least one of the payment application and the payment information.

5. The electronic device (201) of claim 1, wherein the instructions are further adapted, when executed, to cause the processor to:
when a personal identification number, PIN, defined in the deactivation request is inputted, restore the at least one of the payment application and the payment information.

6. The electronic device (201) of claim 1, wherein the instructions are further adapted, when executed, to cause the processor to:
when the payment information is registered to the payment application, transmit device information of the electronic device, user account information, and information on a controllable function of the electronic device, to a server.

7. The electronic device (201) of claim 1, wherein the instructions are further adapted, when executed, to cause the processor to delete the payment information, in response to the deactivation request.

8. The electronic device (201) of claim 1, wherein the instructions are further adapted, when executed, to cause the processor to transmit information on a state change of the at least one of the payment application and the payment information to a server in response to the deactivation request.

9. A method of controlling a payment function in an electronic device (201), the method comprising:
receiving, by a payment application of the electronic device, payment information from an external device and storing, by the payment application, the received payment information;
receiving a deactivation request of at least one of the payment application of the electronic device (201) and the payment information;
in response to the request, deactivating the at least one of the payment application and the payment information; and
replacing the payment application with a dummy program corresponding to the payment application.

10. The method of claim 9, further comprising outputting a user interface, UI, relating to the deactivation to a display (260) of the electronic device (201).

11. The method of claim 9, further comprising:
obtaining biometric recognition information or a password;
comparing the obtained biometric recognition information or password with user biometric recognition information or password predefined in the electronic device (201); and
restoring the at least one of the payment application and the payment information based on the comparison result.

12. The method of claim 9, further comprising:
obtaining a personal identification number, PIN;
comparing the obtained PIN number with a PIN number defined in the stop or deactivation request; and
restoring the at least one of the payment application and the payment information based on the comparison result.

## Patentansprüche

1. Elektronische Vorrichtung (201) zum Unterstützen einer Zahlungsfunktion, wobei die elektronische Vorrichtung Folgendes umfasst:
ein Kommunikationsmodul (220);
zumindest einen Speicher (230), der eine Zahlungsanwendung speichert; und
einen Prozessor (210), der elektrisch mit dem Speicher (230) und dem Kommunikationsmodul (220) verbunden ist,
wobei der Speicher (230) Anweisungen speichert, die ausgelegt sind, wenn sie ausgeführt werden, um den Prozessor (210) zu Folgendem zu veranlassen:
Empfangen, durch die Zahlungsanwendung, von Zahlungsinformationen von einer externen Vorrichtung über das Kommunikationsmodul (220) und Speichern, durch die Zahlungsanwendung, der empfangenen Zahlungsinformationen in dem Speicher (230),
Empfangen einer Deaktivierungsanforderung von zumindest einem von der Zahlungsanwendung und den Zahlungsinformationen von der externen Vorrichtung über das Kommunikationsmodul (220);
als Reaktion auf die Anforderung, Deaktivieren von dem zumindest einen von der Zahlungsanwendung und den Zahlungsinformationen, und
Ersetzen der Zahlungsanwendung durch ein Dummy-Programm, das der Zahlungsanwendung entspricht.

2. Elektronische Vorrichtung (201) nach Anspruch 1, ferner umfassend:
eine Anzeige (260),
wobei die Anweisungen ferner ausgelegt sind, wenn sie ausgeführt werden, um den Prozessor zu Folgendem zu veranlassen:
wenn die Zahlungsfunktion deaktiviert ist, Bereitstellen einer Anzeige, die sich auf die Deaktivierung bezieht, durch die Anzeige (260).

3. Elektronische Vorrichtung (201) nach Anspruch 2, wobei die Anweisungen ferner ausgelegt sind, wenn sie ausgeführt werden, um den Prozessor dazu zu veranlassen, einen Sperrfreigabebildschirm anzuzeigen, um das zumindest eine von der Zahlungsanwendung und den Zahlungsinformationen auf der Anzeige (260) wiederherzustellen.

4. Elektronische Vorrichtung (201) nach Anspruch 1, wobei die Anweisungen ferner ausgelegt sind, wenn sie ausgeführt werden, um den Prozessor zu Folgendem zu veranlassen:
wenn biometrische Erkennungsinformationen oder ein Passwort eines Benutzers, die in der elektronischen Vorrichtung vordefiniert sind, eingegeben werden, Wiederherstellen von dem zumindest einen von der Zahlungsanwendung und den Zahlungsinformationen.

5. Elektronische Vorrichtung (201) nach Anspruch 1, wobei die Anweisungen ferner ausgelegt sind, wenn sie ausgeführt werden, um den Prozessor zu Folgendem zu veranlassen:
wenn eine persönliche Identifikationsnummer, PIN, die in der Deaktivierungsanforderung definiert ist, eingegeben wird, Wiederherstellen von dem zumindest einen von der Zahlungsanwendung und den Zahlungsinformationen.

6. Elektronische Vorrichtung (201) nach Anspruch 1, wobei die Anweisungen ferner ausgelegt sind, wenn sie ausgeführt werden, um den Prozessor zu Folgendem zu veranlassen:
wenn die Zahlungsinformationen in der Zahlungsanwendung registriert sind, Übertragen von Vorrichtungsinformationen der elektronischen Vorrichtung, von Benutzerkontoinformationen und von Informationen zu einer steuerbaren Funktion der elektronischen Vorrichtung an einen Server.

7. Elektronische Vorrichtung (201) nach Anspruch 1, wobei die Anweisungen ferner ausgelegt sind, wenn sie ausgeführt werden, um den Prozessor dazu zu veranlassen, die Zahlungsinformationen als Reaktion auf die Deaktivierungsanforderung zu löschen.

8. Elektronische Vorrichtung (201) nach Anspruch 1, wobei die Anweisungen ferner ausgelegt sind, wenn sie ausgeführt werden, um den Prozessor dazu zu veranlassen, Informationen zu einer Zustandsänderung von dem zumindest einen von der Zahlungsanwendung und den Zahlungsinformationen als Reaktion auf die Deaktivierungsanforderung an einen Server zu übertragen.

9. Verfahren zum Steuern einer Zahlungsfunktion in einer elektronischen Vorrichtung (201), wobei das Verfahren Folgendes umfasst:
Empfangen, durch eine Zahlungsanwendung der elektronischen Vorrichtung, von Zahlungsinformationen von einer externen Vorrichtung und Speichern, durch die Zahlungsanwendung, der empfangenen Zahlungsinformationen;
Empfangen einer Deaktivierungsanforderung von zumindest einem von der Zahlungsanwendung der elektronischen Vorrichtung (201) und den Zahlungsinformationen;
als Reaktion auf die Anforderung, Deaktivieren von dem zumindest einen von der Zahlungsanwendung und den Zahlungsinformationen; und
Ersetzen der Zahlungsanwendung durch ein Dummy-Programm, das der Zahlungsanwendung entspricht.

10. Verfahren nach Anspruch 9, ferner umfassend das Ausgeben einer Benutzerschnittstelle UI, die sich auf die Deaktivierung bezieht, an eine Anzeige (260) der elektronischen Vorrichtung (201).

11. Verfahren nach Anspruch 9, ferner umfassend:
Erhalten von biometrischen Erkennungsinformationen oder eines Passwortes;
Vergleichen der erhaltenen biometrischen Erkennungsinformationen oder des erhaltenen Passwortes mit biometrischen Erkennungsinformationen oder dem Passwort eines Benutzers, die in der elektronischen Vorrichtung (201) vordefiniert sind; und
Wiederherstellen von dem zumindest einen von der Zahlungsanwendung und den Zahlungsinformationen basierend auf dem Vergleichsergebnis.

12. Verfahren nach Anspruch 9, ferner umfassend:
Erhalten einer persönlichen Identifikationsnummer, PIN;
Vergleichen der erhaltenen PIN-Nummer mit einer PIN-Nummer, die in der Stopp- oder Deaktivierungsanforderung definiert ist; und
Wiederherstellen von dem zumindest einen von der Zahlungsanwendung und den Zahlungsinformationen basierend auf dem Vergleichsergebnis.

## Revendications

1. Dispositif électronique (201) destiné à prendre en charge une fonction de paiement, le dispositif électronique comprenant :
un module de communication (220) ;
au moins une mémoire (230) stockant une application de paiement ; et
un processeur (210) raccordé électriquement à la mémoire (230) et au module de communication (220),
ladite mémoire (230) stockant des instructions adaptées, lorsqu'elles sont exécutées, pour amener le processeur (210) à :
recevoir, par l'application de paiement, des informations de paiement en provenance d'un dispositif externe par l'intermédiaire du module de communication (220) et stocker, par l'application de paiement, les informations de paiement reçues dans la mémoire (230),
recevoir une demande de désactivation d'au moins l'une de l'application de paiement et des informations de paiement en provenance du dispositif externe par l'intermédiaire du module de communication (220),
en réponse à la demande, désactiver la au moins une de l'application de paiement et des informations de paiement, et
remplacer l'application de paiement par un programme factice correspondant à l'application de paiement.

2. Dispositif électronique (201) selon la revendication 1, comprenant en outre :
un dispositif d'affichage (260), lesdites instructions étant en outre adaptées pour, lorsqu'elles sont exécutées, amener le processeur à :
lorsque la fonction de paiement est désactivée,
fournir un affichage relatif à la désactivation par l'intermédiaire du dispositif d'affichage (260).

3. Dispositif électronique (201) selon la revendication 2, lesdites instructions étant en outre adaptées pour, lorsqu'elles sont exécutées, amener le processeur à afficher un écran de déverrouillage en vue de la restauration de la au moins une de l'application de paiement et des informations de paiement sur le dispositif d'affichage (260).

4. Dispositif électronique (201) selon la revendication 1, lesdites instructions étant en outre adaptées pour, lorsqu'elles sont exécutées, amener le processeur à :
lorsque des informations de reconnaissance biométriques d'utilisateur ou un mot de passe prédéfini dans le dispositif électronique sont saisis, restaurer la au moins une de l'application de paiement et des informations de paiement.

5. Dispositif électronique (201) selon la revendication 1, lesdites instructions étant en outre adaptées pour, lorsqu'elles sont exécutées, amener le processeur à :
lorsqu'un numéro d'identification personnel, PIN, défini dans la demande de désactivation est saisie, restaurer la au moins une de l'application de paiement et des informations de paiement.

6. Dispositif électronique (201) selon la revendication 1, lesdites instructions étant en outre adaptées pour, lorsqu'elles sont exécutées, amener le processeur à :
lorsque les informations de paiement sont enregistrées dans l'application de paiement, transmettre des informations de dispositif du dispositif électronique, des informations de compte d'utilisateur et des informations sur une fonction pouvant être commandée du dispositif électronique, à un serveur.

7. Dispositif électronique (201) selon la revendication 1, lesdites instructions étant en outre adaptées pour, lorsqu'elles sont exécutées, amener le processeur à supprimer les informations de paiement, en réponse à la demande de désactivation.

8. Dispositif électronique (201) selon la revendication 1, lesdites instructions étant en outre adaptées pour, lorsqu'elles sont exécutées, amener le processeur à transmettre des informations sur un changement d'état de la au moins une de l'application de paiement et des informations de paiement à un serveur en réponse à la demande de désactivation.

9. Procédé de commande d'une fonction de paiement dans un dispositif électronique (201), ledit procédé comprenant :
la réception, par une application de paiement du dispositif électronique, des informations de paiement en provenance d'un dispositif externe et le stockage, par l'application de paiement, des informations de paiement reçues ;
la réception d'une demande de désactivation d'au moins l'une de l'application de paiement du dispositif électronique (201) et des informations de paiement ;
en réponse à la demande, la désactivation de la au moins une de l'application de paiement et des informations de paiement ; et
le remplacement de l'application de paiement par un programme factice correspondant à l'application de paiement.

10. Procédé selon la revendication 9, comprenant en outre l'émission en sortie d'une interface utilisateur, UI, relative à la désactivation vers un dispositif d'affichage (260) du dispositif électronique (201).

11. Procédé selon la revendication 9, comprenant en outre :
l'obtention des informations de reconnaissance biométriques ou d'un mot de passe ;
la comparaison des informations de reconnaissance biométriques ou du mot de passe obtenus avec les informations de reconnaissance biométriques de l'utilisateur ou le mot de passe prédéfini dans le dispositif électronique (201) ; et
la restauration de la au moins une de l'application de paiement et des informations de paiement sur la base du résultat de comparaison.

12. Procédé selon la revendication 9, comprenant en outre :
l'obtention d'un numéro d'identification personnel, PIN ;
la comparaison du numéro PIN obtenu avec un numéro PIN défini dans la demande d'arrêt ou de désactivation ; et
la restauration de la au moins une de l'application de paiement et des informations de paiement sur la base du résultat de comparaison.
